# EUROPEAN PATENT APPLICATION

(11) **EP 4 748 686 A1**
(43) Date of publication of application: **27.05.2026**
(21) Application number: 25215417.4
(22) Date of filing: 12.11.2025
(51) Int. Cl.: B62D 21/15, B62D 25/02

(54) **VEHICLE LOWER SECTION STRUCTURE**

(30) Priority: 21.11.2024 JP 2024203255
(71) Applicant: Toyota Jidosha Kabushiki Kaisha, Toyota-shi, Aichi-ken 471-8571 (JP)
(72) Inventor: CHIKAZAWA, Ryosuke, TOYOTA-SHI, AICHI-KEN, 471-8571 (JP); MISAWA, Hisashi, TOYOTA-SHI, AICHI-KEN, 471-8571 (JP); TSUNEKAWA, Akira, TOYOTA-SHI, AICHI-KEN, 471-8571 (JP)
(74) Representative: Cabinet Beau de Loménie

(57) **Abstract**

A vehicle lower section structure including a battery (14) and an energy absorption member (28). The energy absorption member (28) includes an upper wall (30), a lower wall (32), and plural upright partitioning walls (40) that form plural spaces (42, 44, 46). The spaces along a vehicle width direction from an outermost space (42) to a freely selected space (46) of the spaces are provided alternately with either a pair of first indentations (64, 66, 74, 76) in a lower face of the upper wall (30) indented toward a vehicle upper side of the space and in an upper face of the lower wall (32) indented toward a vehicle lower side of the space, or a pair of second indentations (68, 70) in an upper face of the upper wall (30) indented toward the vehicle lower side of the space and in a lower face of the lower wall (32) indented toward the vehicle upper side of the space.

## Description

### BACKGROUND

### Technical Field

The present disclosure relates to a vehicle lower section structure.

### Related Art

Japanese Patent Application Laid-Open (JP-A) No. 2014-080116, discloses technology related to a vehicle battery mounting structure. In this conventional art, an energy absorption member is provided at a vehicle width direction outside of a battery frame that supports a fuel cell stack from a vehicle lower side. This energy absorption member is configured as a structure in which block units having a rectangular closed-cross-section profile are combined in two upper/lower tiers, and during a side impact of a vehicle (hereinafter referred to as during a "vehicle side impact"), crash energy is absorbed by the energy absorption member undergoing plastic deformation.

Although the conventional art described above is configured such that crash energy is absorbed by the energy absorption member undergoing plastic deformation in this manner, preferably the deformation mode of the energy absorption member is stabilized when the energy absorption member is undergoing plastic deformation, so as to enable crash energy to be more effectively absorbed.

### SUMMARY

The present disclosure provides a vehicle lower section structure that may stabilize a deformation mode of an energy absorption member during a vehicle side impact.

A first aspect of the present disclosure is a vehicle lower section structure including: a battery; and an energy absorption member disposed at a vehicle width direction outside of the battery, the energy absorption member being formed with a closed-cross-section section that extends in the vehicle width direction in front view as viewed from a vehicle front-rear direction, wherein the energy absorption member is configured to include: an upper wall configuring a vehicle height direction upper end portion of the closed-cross-section section, a lower wall configuring a vehicle height direction lower end portion of the closed-cross-section section, and plural upright partitioning walls that partition the inside of the closed-cross-section section, between the upper wall and the lower wall, in the vehicle width direction to form plural spaces; and wherein the spaces along the vehicle width direction from an outermost space disposed at a vehicle width direction outside to a freely selected space of the spaces are provided alternately with either: a pair of first indentations in a lower face of the upper wall indented toward a vehicle upper side of the space and in an upper face of the lower wall indented toward a vehicle lower side of the space, or a pair of second indentations in an upper face of the upper wall indented toward the vehicle lower side of the space and in a lower face of the lower wall indented toward the vehicle upper side of the space.

The vehicle lower section structure according to the first aspect includes the battery and the energy absorption member, wherein the energy absorption member is disposed at the vehicle width direction outside of the battery, and is formed with a closed-cross-section section that extends overall in the vehicle width direction in front view as viewed from the vehicle front-rear direction. The energy absorption member is configured including the upper wall, the lower wall, and the plural upright partitioning walls. The upper wall configures the vehicle height direction upper end portion of the closed-cross-section section, and the lower wall configures the vehicle height direction lower end portion of the closed-cross-section section. Moreover, the plural upright partitioning walls partition the inside of the closed-cross-section section between the upper wall and the lower wall (the inside of the energy absorption member) in the vehicle width direction, thereby forming plural spaces inside the closed-cross-section section of the energy absorption member.

In the plural spaces, the spaces along the vehicle width direction from the outermost space disposed at the vehicle width direction outside to the freely selected space are provided alternately with either the pair of first indentations or the pair of second indentations.

The pair of first indentations are respectively formed in the lower face of the upper wall indented toward the vehicle upper side of the space and in the upper face of the lower wall indented toward the vehicle lower side of the space. In this manner, due to the pair of first indentations being formed to the upper wall and the lower wall of the energy absorption member, when crash load is input to the energy absorption member during a vehicle side impact, the energy absorption member is axially compressed, and the space undergoes deformation (buckling deformation) along the vehicle height direction toward the outside of the space about the pair of first indentations. Crash energy is thereby absorbed in response to the crash load input during a vehicle side impact.

On the other hand, the pair of second indentations are respectively formed in the upper face of the upper wall indented toward the vehicle lower side of the space and in the lower face of the lower wall indented toward the vehicle upper side of the space. Due to the pair of second indentations being formed to the upper wall and the lower wall of the energy absorption member in this manner, when crash load is input to the energy absorption member during a vehicle side impact, the energy absorption member is axially compressed, and the spaces undergo deformation (buckling deformation) along the vehicle height direction toward the inside of the spaces about the pair of second indentations. This means that the crash energy is absorbed by the energy absorption members in response to crash load input during a vehicle side impact.

Namely, in the present aspect, when the pair of first indentations are provided to a space, the space deforms along the vehicle height direction toward the outside of the space about (with an origin of) the pair of first indentations, and when the pair of second indentations are provided to a space, the space deforms along the vehicle height direction toward the inside of the space about (with an origin of) the pair of second indentations.

In the present aspect, the spaces along the vehicle width direction from the outermost space disposed at the vehicle width direction outside until reaching a freely selected space are provided alternately with either the pair of first indentations or the pair of second indentations. In the present aspect, during a vehicle side impact, the spaces along the vehicle width direction of the energy absorption member alternately either deform along the vehicle height direction toward the outside of the space, or deform along the vehicle height direction toward the inside of the space.

Namely, in the present aspect, a so-called pantograph deformation can be induced in the energy absorption member during a vehicle side impact about the pair of first indentations and the pair of second indentations, thereby enabling the deformation mode by axial compression of the energy absorption member to be stabilized. In this manner, stabilizing the deformation mode of the energy absorption member enables crash energy to be effectively absorbed by the energy absorption member in response to crash load input during a vehicle side impact. As a result thereof, energy absorption by the energy absorption member can be achieved with a short stroke.

Reference here to "indentation" means a so-called notch, and includes notch profiles having a rectangular shape, V-shape, U-shape, and the like.

In a second aspect of the present disclosure, in the first aspect, the pair of first indentations may be provided at the outermost space.

In the vehicle lower section structure according to the second aspect, the pair of first indentations are provided to the outermost space disposed at the vehicle width direction outside of the energy absorption member. In the present aspect, the energy absorption member accordingly firstly deforms along the vehicle height direction toward the outside of the space during a vehicle side impact. Next, deformation is along the vehicle height direction toward the inside of the space, and the energy absorption member performs pantograph deformation.

In a third aspect of the present disclosure, in the first aspect or the second aspect, the energy absorption member may include a lateral partitioning wall to partition the inside of the closed-cross-section section by vehicle upper/lower partitioning; and a third indentation that is either in an upper face of the lateral partitioning wall indented toward the vehicle lower side or is in a lower face of the lateral partitioning wall indented toward the vehicle upper side may be provided to the spaces where the pair of first indentations or the pair of second indentations are formed.

In the vehicle lower section structure according to the third aspect, the lateral partitioning wall is provided in the energy absorption member to partition the inside of the closed-cross-section section by vehicle upper/lower partitioning. Namely, in the present aspect, the energy absorption member is configured by a two-tier structure. Due to the energy absorption member being configured by a two-tier structure in this manner, a higher load can be output than that of a single-tier structure, enabling shortening of the stroke when the energy absorption member undergoes plastic deformation when input with a crash load.

The third indentation is formed to the lateral partitioning wall indented toward the vehicle lower side on the upper face thereof, or indented toward the vehicle upper side on the lower face thereof, and the third indentation is provided to the spaces where the pair of first indentations or the pair of second indentations have been formed.

This means that when the crash load is input to the energy absorption member during a vehicle side impact, accompanying deformation about origins of the pairs of first indentations and second indentations formed to the upper wall and the lower wall of the energy absorption member, the lateral partitioning wall also undergoes deformation (buckling deformation) about (with an origin of) the third indentation. The crash energy is thereby absorbed by plastic deformation of the energy absorption member in response to the crash load input during a vehicle side impact.

In a fourth aspect of the present disclosure, in any one aspect of the first aspect to the third aspect, the vehicle lower section structure may further comprise a support member provided at the battery, the support member supporting the energy absorption member, the support member may include a fixing wall that configures a part of the support member to which the energy absorption member provided along the vehicle width direction is fixed, and the fixing wall and the lateral partitioning wall may overlap in the vehicle height direction.

In the vehicle lower section structure according to the fourth aspect, the support member supporting the energy absorption member is provided to the battery. The fixing wall is provided to the support member where the energy absorption member provided along the vehicle width direction is fixed, and the fixing wall and the lateral partitioning wall, which partitions the inside of the closed-cross-section section of the energy absorption member by vehicle upper/lower partitioning, overlap with each other in the vehicle height direction.

Namely, in the present aspect, the lateral partitioning wall of the energy absorption member and the fixing wall of the support member are in a superimposed state in vehicle side view as viewed from the vehicle width direction outside. This means that in the present aspect, crash load input to the energy absorption member during a vehicle side impact can be transmitted from the lateral partitioning wall to the fixing wall of the support member. In other words, the crash load can be distributed from the energy absorption member to the support member.

Reference here to the fixing wall and the lateral partitioning wall overlapping in the vehicle height direction does not necessarily mean that the fixing wall and the lateral partitioning wall are totally superimposed in vehicle side view, and includes configurations in which at least part is superimposed.

In a fifth aspect of the disclosure, in any one aspect of the first aspect to the fourth aspect, for adjacent of the spaces along the vehicle width direction, the upper wall, the lower wall, and the lateral partitioning wall, may have a plate thickness that is thicker for a space at the vehicle width direction inside than for a space at the vehicle width direction outside.

In the vehicle lower section structure according to the fifth aspect, for adjacent of the spaces along the vehicle width direction, the upper wall, the lower wall, and the lateral partitioning wall of the energy absorption member have a plate thickness that is thicker for the vehicle width direction inside space than for the vehicle width direction outside space. Namely, in the present aspect, the rigidity in the energy absorption member is higher at the vehicle width direction inside than at the vehicle width direction outside.

This means that in the present aspect, in response to crash load input during a vehicle side impact, the load needed to deform the energy absorption member rises on progression from the vehicle width direction outside to the vehicle width direction inside. Namely, in the present aspect, load is lower at an initial stage during a vehicle side impact of a vehicle so as to reduce the burden on an occupant, and the amount of crash energy absorption in the energy absorption member is configured so as to increase from the vehicle width direction outside toward the vehicle width direction inside.

In a sixth aspect of the present disclosure, in any one aspect from the first aspect to the fifth aspect, the energy absorption member may include a lateral partitioning wall provided inside the closed-cross-section section to partition plural spaces by vehicle upper/lower partitioning respectively into an upper space and a lower space, and a position corresponding to an innermost upper space disposed at a vehicle upper side of an innermost lower space provided at the vehicle width direction inside of the energy absorption member may be cut away, and the support member may be provided at the position corresponding to the innermost upper space.

In the vehicle lower section structure according to the sixth aspect, the lateral partitioning wall is provided inside the closed-cross-section section of the energy absorption member, and the plural spaces provided along the vehicle width direction are partitioned by vehicle upper/lower partitioning respectively into an upper space and the lower space about the lateral partitioning wall. Moreover, a position corresponding to the innermost upper space disposed at the vehicle upper side of the innermost lower space provided to the vehicle width direction inside of the energy absorption member is cut away, and the support member is provided to the position corresponding to the innermost upper space.

In this manner, the support member is disposed at the innermost upper space of the energy absorption member, and the upper wall of the innermost lower space disposed at the innermost lower space at the vehicle lower side of the support member is fixed to the fixing wall of the support member. Namely, the support member configures part of the upper space of the energy absorption member. When a crash load is input to the energy absorption member, the energy absorption member is accordingly able to be supported by the fixing wall and the side wall of the support member and, for example, collapsing of the energy absorption member toward the vehicle lower side can be suppressed more than when an energy absorption member has been fixed to a lower side of the support member.

In a seventh aspect of the present disclosure, in any one aspect from the first aspect to the sixth aspect, the energy absorption member may include a lateral partitioning wall provided inside the closed-cross-section section to partition the plural spaces by vehicle upper/lower partitioning respectively into an upper space and a lower space, and a height dimension along the vehicle height direction of the lower space may be greater than the height dimension of the upper space, and the height dimension of the lower space may be greater than a width dimension along the vehicle width direction of the upper space.

In the vehicle lower section structure according to the seventh aspect, the lateral partitioning wall is provided inside the closed-cross-section section of the energy absorption member, and the plural spaces provided along the vehicle width direction are partitioned by vehicle upper/lower partitioning respectively into an upper space and a lower space about the lateral partitioning wall. The height dimension of the lower space along the vehicle height direction is greater than the height dimension of the upper space, and the height dimension of the lower space is greater than the width dimension along the vehicle width direction of the upper space.

When the pair of second indentations is provided to the upper wall and the lower wall of the energy absorption member, the upper wall deforms toward the inside of the upper space, and the lower wall deforms toward the inside of the lower space. In the present aspect, due to the height dimension of the lower space being greater than the height dimension of the upper space, the lateral partitioning wall is able to be deformed toward the inside of the lower space due to the third indentation being provided on the upper face side of the lateral partitioning wall. Namely, interference between the lateral partitioning wall and the upper wall is avoided, thereby achieving a configuration such that their deformations do not impede each other.

On the other hand, in the lower space, the lower wall and the lateral partitioning wall deform toward the inside of the lower space. In the present aspect, the height dimension of the lower space is greater than the width dimension along the vehicle width direction of the upper space, and the height dimension of the lower space is greater than the width dimension of the lateral partitioning wall and the lower wall. This thereby enables interference between the lateral partitioning wall and the lower wall to be avoided in the lower space even though both the lateral partitioning wall and the lower wall deform toward the inside of the lower space, thereby achieving a configuration such that their deformations do not impede each other.

In an eighth aspect of the present disclosure, in any one aspect of the first aspect to the seventh aspect, the third indentation may be formed at a lower face of the lateral partitioning wall at a position corresponding to the pair of first indentations, and may be formed to an upper face of the lateral partitioning wall at a position corresponding to the pair of second indentations.

In the vehicle lower section structure according to the eighth aspect, the third indentation provided to the lateral partitioning wall is formed to a lower face of the lateral partitioning wall at a position corresponding to the pair of first indentations. When the pair of first indentations are provided, the upper wall deforms along the vehicle height direction toward the outside of the upper space (upward) and the lower wall deforms along the vehicle height direction toward the outside of the lower space (downward) by deformation about the pair of first indentations. The third indentation is formed to the lower face of the lateral partitioning wall. Due to adopting this approach, the lateral partitioning wall deforms along the vehicle height direction toward the inside of the upper space (upward), however the upper wall deforms toward the outside of the upper space (upward), and so interference between the lateral partitioning wall and the upper wall may be avoided, thereby achieving a configuration such that their deformations do not impede each other.

Moreover, in the present aspect, the third indentation provided to the lateral partitioning wall is formed to the upper face of the lateral partitioning wall at a position corresponding to the pair of second indentations. When the pair of second indentations are provided, the upper wall deforms along the vehicle height direction toward the inside of the upper space (downward) and the lower wall deforms along the vehicle height direction toward the inside of the lower space (upward) by deformation about the pair of second indentations. The third indentation is accordingly formed on the upper face of the lateral partitioning wall. This means that the lateral partitioning wall deforms along the vehicle height direction toward the inside of the lower space (downward).

In the present aspect, the height dimension of the lower space is greater than the width dimension of the lateral partitioning wall and the lower wall. This means that in the present aspect, in the lower space, interference between the lateral partitioning wall and the lower wall may be avoided even though the lateral partitioning wall and the lower wall deform toward the inside of the lower space, thereby achieving a configuration such that their deformations do not impede each other.

In a ninth aspect of the present disclosure, in any one aspect of the first aspect to the eighth aspect, may further include: a side frame extending in the vehicle front-rear direction, the side frame being disposed at the vehicle width direction outside of the battery; and a rocker extending in the vehicle front-rear direction, the rocker being disposed at the vehicle width direction outside of the side frame, wherein the energy absorption member may extend toward the vehicle width direction outside at a vehicle height direction lower side of the side frame.

In the vehicle lower section structure according to the ninth aspect, the side frame extends in the vehicle front-rear direction at the vehicle width direction outside of the battery, and the rocker extends in the vehicle front-rear direction at the vehicle width direction outside of the side frame. This means that the energy absorption member extends to the vehicle width direction outside at the vehicle height direction lower side of the side frame.

Namely, in the present aspect, the rocker, the energy absorption member, and the side frame are disposed in the vehicle in this sequence from the vehicle width direction outside, and the crash energy is mainly absorbed by the rocker and the energy absorption member in response to the crash load input during a vehicle side impact. Due to the present aspect being able to stabilize the deformation mode of the energy absorption member during a vehicle side impact, the crash energy may be effectively absorbed in response to the input crash load.

Providing an energy absorption member just beside a battery is difficult in a so-called body-on-frame vehicle due to space constraints being different to those of a monocoque vehicle. This means that in a body-on-frame vehicle, for example, a configuration is adopted in which the energy absorption member is provided along the vehicle width direction at a vehicle lower side of the side frame and the rocker, however, achieving effective absorption of the crash energy is difficult in cases in which the deformation mode of the energy absorption member is not stabilized.

In contrast thereto, in the present aspect, due to being able to stabilize the deformation mode of the energy absorption member during a vehicle side impact, the crash energy may be effectively absorbed in response to the input crash load. Namely, the present aspect is applicable to a body-on-frame vehicle.

In a tenth aspect of the present disclosure, in any one aspect of the first aspect to the ninth aspect, the pair of first indentations or the pair of second indentations provided to the upper wall and the lower wall, and the third indentation provided to the lateral partitioning wall, may be provided to an outside space section further to the vehicle width direction outside than the side frame, the side frame may extend in the vehicle front-rear direction and may be disposed at the vehicle width direction outside of the battery.

In the vehicle lower section structure according to the tenth aspect, the pair of first indentations or the pair of second indentations that are provided to the upper wall and the lower wall of the energy absorption member, and the third indentation that is provided to the lateral partitioning wall thereof, are provided to the outside space section that is further to the vehicle width direction outside than the side frame. Namely, the outside space section of the energy absorption member has a lower rigidity than an inside space section, facilitating buckling deformation thereof.

Due to the outside space section of the energy absorption member and the rocker being disposed further to the vehicle width direction outside than the side frame, crash energy is absorbed by plastic deformation of the rocker and the outside space section of the energy absorption member in response to the crash load input during a vehicle side impact. Then on receipt of remaining crash load, crash energy may be absorbed by the side frame and the inside space section of the energy absorption member.

In the above aspect, the vehicle lower section structure of the present disclosure may stabilize a deformation mode of an energy absorption member during a vehicle side impact.

### BRIEF DESCRIPTION OF THE DRAWINGS

Exemplary embodiments will be described in detail based on the following figures, wherein:
Fig. 1 is a schematic cross-section depicting a configuration of a left side of a vehicle applied with a vehicle lower section structure according to an exemplary embodiment, as sectioned along a vehicle height direction and a vehicle width direction;
Fig. 2 is a cross-section of an EA member configuring part of a vehicle lower section structure according to the present exemplary embodiment, as sectioned along the vehicle height direction and the vehicle width direction;
Fig. 3 is a schematic cross-section illustrating a configuration of a left side of a vehicle applied with a vehicle lower section structure according to the present exemplary embodiment, as sectioned along a vehicle height direction and a vehicle width direction;
Fig. 4 is a schematic cross-section to explain an operation of an EA member configuring part of a vehicle lower section structure according to the present exemplary embodiment;
Fig. 5A is a cross-section illustrating an EA member configuring part of a vehicle lower section structure according to the present exemplary embodiment;
Fig. 5B is a cross-section illustrating by double-dashed broken lines a deformation mode of the EA member illustrated in Fig. 5A; and
Fig. 6 is a cross-section illustrating a deformation mode of an EA member during a side impact of a vehicle applied with a vehicle lower section structure according to the present exemplary embodiment, illustrated as a time series.

### DETAILED DESCRIPTION

Description follows regarding a vehicle lower section structure according to an exemplary embodiment of the present disclosure, with reference to the drawings. Note that as appropriate in the drawings, arrow UP and arrow OUT respectively indicate an upward direction for the vehicle applied with the vehicle lower section structure according to the present exemplary embodiment, and an outward direction in the vehicle width direction. Moreover, unless explicitly stated otherwise, references in the description simply to front and rear, left and right, and up and down directions indicate front and rear in the vehicle front-rear direction, left and right in the vehicle left-right direction (vehicle width direction), and up and down in the vehicle height direction. Moreover, sometimes members and reference numerals may be omitted in the drawings in order to facilitate reading of the drawings.

### [Vehicle Lower Section Structure Configuration]

First description follows regarding a configuration of a vehicle lower section structure according to the present exemplary embodiment.

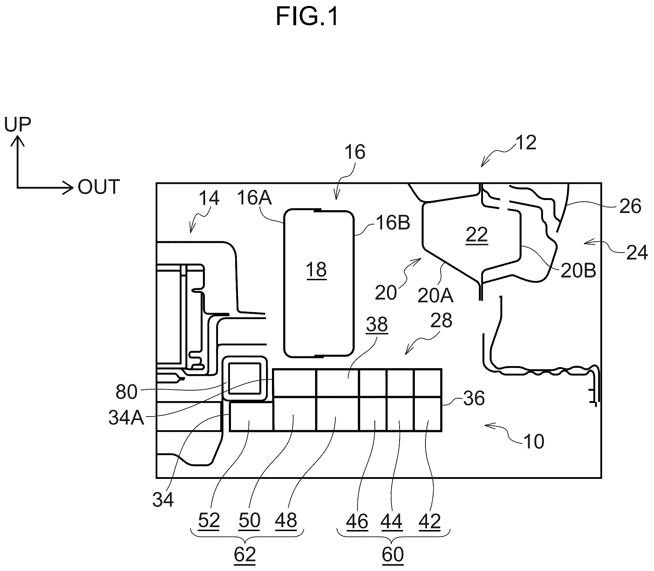

Fig. 1 illustrates a schematic cross-section of a configuration of a vehicle lower section structure 10 according to the present exemplary embodiment as sectioned along the vehicle height direction and vehicle width direction in a so-called body-on-frame vehicle (hereafter referred to as "vehicle) 12 applied with the vehicle lower section structure 10. The vehicle 12 illustrated in Fig. 1 is an electric car travelling under the driving force of a non-illustrated electric motor, and a battery pack (battery) 14 housing plural battery cells for supplying electrical power for driving the electric motor is provided in a lower section of the vehicle 12.

The vehicle 12 includes a left-right pair of side frames 16 respectively disposed at the two vehicle width direction sides, which serve as framework members extending along the vehicle front-rear direction. The side frames 16 are configured to include an inner panel 16A and an outer panel 16B, that are, for example, formed from sheet steel. The inner panel 16A is disposed at the vehicle width direction inside, and forms an edgeless cap profile opening toward the vehicle width direction outside, in a cross-section profile when sectioned along the vehicle height direction and vehicle width direction. The outer panel 16B is disposed at the vehicle width direction outside, forms an edgeless cap profile opening toward the vehicle width direction inside in the cross-section profile, and forms a closed-cross-section section 18 together with the inner panel 16A.

Rockers 20, which serve as framework members extending in the vehicle front-rear direction, are provided at the vehicle width direction outside of the side frames 16. The rockers 20 are configured to include a rocker inner panel 20A and a rocker outer panel 20B, that are, for example, formed from sheet steel. The rocker inner panel 20A is disposed at the vehicle width direction inside, and forms a substantially hat shape opening toward the vehicle width direction outside, in a cross-section profile sectioned along the vehicle height direction and vehicle width direction. The rocker outer panel 20B is disposed at the vehicle width direction outside, forms a substantially hat shape opening toward the vehicle width direction inside in the cross-section profile, and forms a closed-cross-section section 22 together with the rocker inner panel 20A. Note that a side outer panel 26 configuring styling of a vehicle side section 24 is provided at the vehicle width direction outside of the rocker 20.

Moreover, in the present exemplary embodiment, an energy absorption member (hereafter referred to as "EA member") 28 is provided at a lower side of the side frames 16. The EA member 28 is disposed at the vehicle width direction outside of the battery pack 14, and forms a closed-cross-section section 38 that extends overall in the vehicle width direction in front view along the vehicle front-rear direction.

### [EA Member]

Description follows regarding the EA member 28.

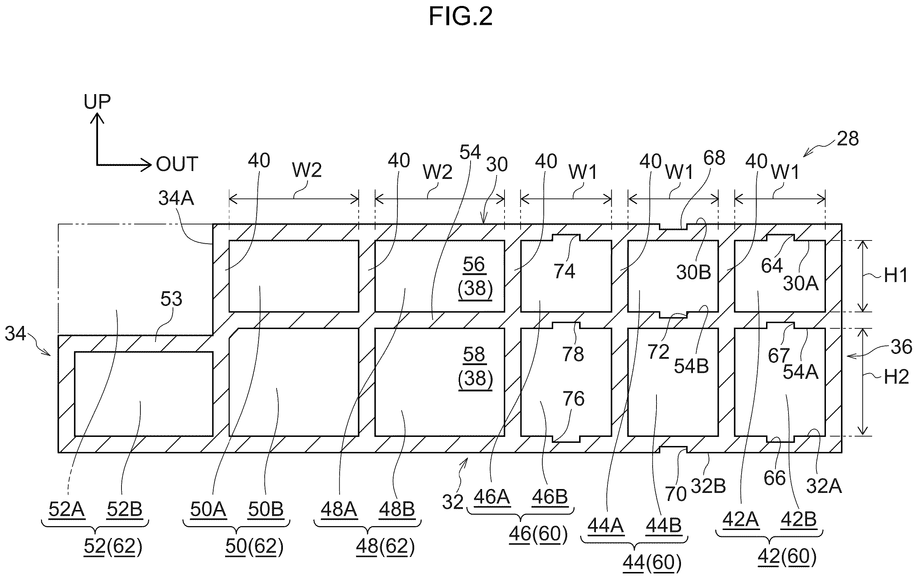

As illustrated in Fig. 1 and Fig. 2, the EA member 28 in the present exemplary embodiment is formed with an overall substantially rectangular shaped profile in front view, and is configured including an upper wall 30 configuring a vehicle height direction upper end portion thereof, a lower wall 32 configuring a vehicle height direction lower end portion thereof, an inner wall 34 configuring a vehicle width direction inner end portion (battery pack 14 side) thereof, and an outer wall 36 configuring a vehicle width direction outer end portion thereof. In the present exemplary embodiment, the closed-cross-section section 38 is formed by the upper wall 30, the lower wall 32, the inner wall 34, and the outer wall 36. Note that for the inner wall 34, a step portion 34A is provided at an upper side of the EA member 28, with the step portion 34A being cut away at a position corresponding to an innermost upper space section 52A, described later.

Moreover, as illustrated in Fig. 2, plural upright partitioning walls 40 are provided between the upper wall 30 and the lower wall 32, and the inside of the closed-cross-section section 38 is partitioned in the vehicle width direction thereby so as to form plural spaces 42, 44, 46, 48, 50, 52. In the EA member 28, the spaces 42 disposed at the vehicle width direction outside are called outermost spaces 42. In the following description, reference is made to the outermost spaces 42 when specifically identifying a position of the spaces 42, however sometimes reference is made to spaces 42 when simply describing the spaces.

Furthermore, a lateral partitioning wall 54 is provided in the closed-cross-section section 38 so as to partition the inside of the closed-cross-section section 38 by vehicle upper/lower partitioning. The spaces 42, 44, 46, 48, 50, 52 are partitioned into an upper space section 56 and a lower space section 58 by the lateral partitioning wall 54. Namely, the EA member 28 is configured as a two-tier structure with the spaces 42 partitioned into an upper space 42A and a lower space 42B, the spaces 44 partitioned into an upper space 44A and a lower space 44B, the spaces 46 partitioned into an upper space 46A and a lower space 46B, the spaces 48 partitioned into an upper space 48A and the lower space 48B, the spaces 50 partitioned into an upper space 50A and a lower space 50B, and the spaces 52 partitioned into an upper space 52A and a lower space 52B. Note that the spaces 52 are described later.

Moreover, for example, a height dimension H2 of the lower space 42B is greater than a height dimension H1 of the upper space 42A (H1 < H2), and the height dimension H2 of the lower space 42B is greater than a width dimension W1 of the upper space 42A (W1 < H2).

Furthermore, as illustrated in Fig. 1, the outer wall 36 of the EA member 28 is disposed further to the vehicle width direction outside than the outer panel 16B of the side frames 16, and further to the vehicle width direction inside than the rocker outer panel 20B of the rocker 20. In the EA member 28, the spaces 42, 44, 46 that are further to the vehicle width direction outside than the side frames 16 in front view along the vehicle front-rear direction will be called an outside space section 60. On the other hand, the spaces 48, 50, 52 provided in the EA member 28 further to the vehicle width direction inside than the outside space section 60 will be called an inside space section 62.

Moreover, as illustrated in Fig. 2, the width dimensions W1 of the spaces 42, 44, 46 configuring the outside space section 60 are configured as substantially the same dimension as each other, and width dimensions W2 of the spaces 48, 50 configuring the inside space section 62 are configured as substantially the same dimensions as each other. The width dimension W2 in the inside space section 62 is also greater than the width dimension W1 in the outside space section 60.

In the outside space section 60 of the EA member 28, in the outermost spaces 42, a first indentation 64 indented toward the vehicle upper side of the upper space 42A is provided at a width direction substantially central portion of a lower face 30A of the upper wall 30. Moreover, in the outermost spaces 42, a first indentation 66 indented toward the vehicle lower side of the lower space 42B is provided at a width direction substantially central portion of an upper face 32A of the lower wall 32. Furthermore, in the outermost spaces 42, a third indentation 67 indented toward the vehicle upper side of the lower space 42B is provided at a width direction substantially central portion of a lower face 54A of the lateral partitioning wall 54.

Moreover, in the outside space section 60 of the EA member 28, in the spaces 44, a second indentation 68 indented toward the vehicle lower side of the upper space 44A is provided at a width direction substantially central portion of an upper face 30B of the upper wall 30. Moreover, in the spaces 44, a second indentation 70 indented toward the vehicle upper side of the lower space 44B is provided at a width direction substantially central portion of a lower face 32B of the lower wall 32. Furthermore, in the spaces 44, a third indentation 72 indented toward the vehicle lower side of the lower space 44B is provided at a width direction substantially central portion of an upper face 54B of the lateral partitioning wall 54.

Furthermore, in the outside space section 60 of the EA member 28, in the spaces 46 a first indentation 74 indented toward the vehicle upper side of the upper space 46A is provided at a width direction substantially central portion of the lower face 30A of the upper wall 30. Moreover, in the spaces 46, a first indentation 76 indented toward the vehicle lower side of the lower space 46B is provided at a width direction substantially central portion of the upper face 32A of the lower wall 32. Furthermore, in the spaces 46, a third indentation 78 indented toward the vehicle upper side of the lower space 46B is provided at a width direction substantially central portion of the lower face 54A of the lateral partitioning wall 54.

In the present exemplary embodiment, the spaces (outermost spaces) 42, the spaces 44, and the spaces 46 along the vehicle width direction are provided alternately with either the pair of first indentations 64, 66, or the pair of second indentations 68, 70, or the pair of first indentations 74, 76. However, there are no first indentations 64, 66 or the like provided to the spaces 48, 50, 52 corresponding to the inside space section 62 of the EA member 28.

Moreover, in the EA member 28, for adjacent spaces 42, 44, 46, 48, 50, 52 along the vehicle width direction, the upper wall 30, the lower wall 32, and the lateral partitioning wall 54 are configured thicker in plate thickness at the space on the vehicle width direction inside to at the space on the vehicle width direction outside. For example, although not illustrated in the drawings, a relationship t1 < t2 < t3 < t4 < t5 is established, wherein t1 is a plate thickness of the outermost spaces 42, t2 is a plate thickness of the spaces 44, t3 is a plate thickness of the spaces 46, t4 is a plate thickness of the spaces 48, and t5 is a plate thickness of the spaces 50.

Note that the spaces 52 may have substantially the same plate thicknesses to the spaces 50. Moreover, the plate thickness is not necessarily always substantially constant in the vehicle width direction for each of the spaces. For example, a configuration may be adopted in which the plate thickness of each of the spaces is formed so as to be gradually thicker on progression from the vehicle width direction outside toward the vehicle width direction inside.

However, in the EA member 28, a position of the space 52 corresponding to an innermost upper space 52A disposed at the vehicle upper side of the innermost lower space 52B provided at the vehicle width direction inside of the EA member 28 is cut away to form the step portion 34A.

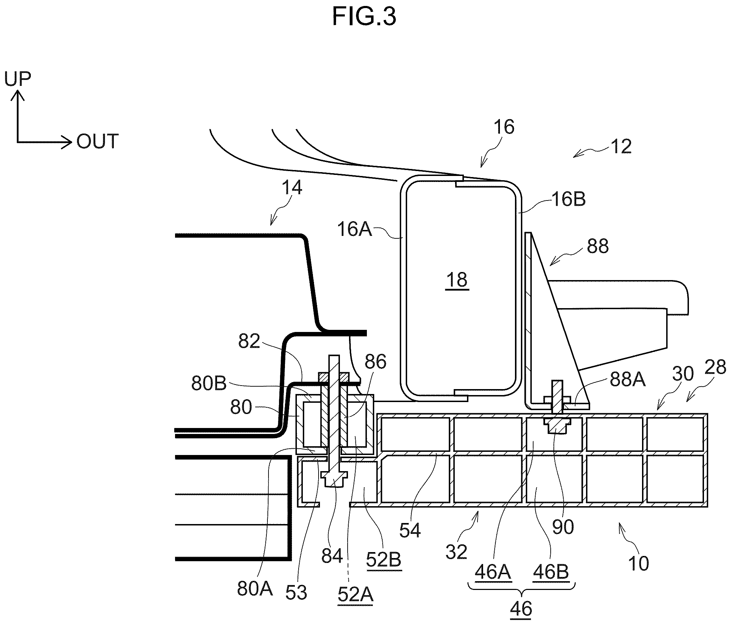

Then, as illustrated in Fig. 3, a support member 80 is provided to the battery pack 14 at a position corresponding to the innermost upper space 52A. In the present exemplary embodiment, the EA member 28 provided at the vehicle width direction outside of the battery pack 14 is configured so as to be supported by the support member 80.

The support member 80 is, for example, attachable to an attachment bracket 82 provided to the battery pack 14. The support member 80 is formed with a rectangular shaped cross-section profile when sectioned along the vehicle height direction and vehicle width direction, and an upper wall 53 of the innermost lower space 52B of the EA member 28 is fixed to a fixing wall 80A configuring a lower section of the support member 80.

This means that insertion holes into which fastening bolts 84 can be inserted are respectively formed in the attachment bracket 82, an upper wall 80B and the fixing wall 80A of the support member 80, and in the upper wall 53 of the innermost lower space 52B and the lower wall 32.

Note that cylindrical tube-shaped collars 86 through which the fastening bolts 84 can be inserted may be provided between the attachment bracket 82 and the fixing wall 80A of the support member 80. This thereby enables a separation distance between the attachment bracket 82 and the fixing wall 80A of the support member 80 to be substantially constant.

Moreover, the upper wall 53 of the innermost lower space 52B is disposed further to the vehicle lower side than the lateral partitioning wall 54 of the EA member 28 by an amount that is substantially the plate thickness of the fixing wall 80A of the support member 80. This means that in a state in which the upper wall 53 of the innermost lower space 52B of the EA member 28 has been fixed to the fixing wall 80A of the support member 80, the fixing wall 80A of the support member 80 and the lateral partitioning wall 54 of the EA member 28 overlap with each other in the vehicle height direction. Namely, at least a portion of the fixing wall 80A of the support member 80 and the lateral partitioning wall 54 of the EA member 28 are superimposed on each other in vehicle side view.

However, in the side frames 16, a jack-up bracket 88 to be abutted by a non-illustrated jack contact portion is provided to each of the side frames 16. The jack-up bracket 88 is, for example, formed with a substantially L-shaped cross-section profile when sectioned along the vehicle height direction and vehicle width direction, and the upper wall 30 of the space 46 of the EA member 28 is coupled by bolts 90 or the like to a lateral wall 88A configuring a lower end portion of the jack-up bracket 88.

### [Vehicle Lower Section Structure Operation]

Next, description follows regarding the operation of the vehicle lower section structure according to the present exemplary embodiment.

The vehicle lower section structure according to the present exemplary embodiment includes, as illustrated in Fig. 3, the battery pack 14 and the EA member 28, with the EA member 28 forming a closed-cross-section section 38 that is disposed at the vehicle width direction outside of the battery pack 14 and that extends in the vehicle width direction in front view when viewed along the vehicle front-rear direction.

Moreover, as illustrated in Fig. 2, in the present exemplary embodiment, the EA member 28 is configured including the upper wall 30, the lower wall 32, and the plural upright partitioning walls 40, with the plural upright partitioning walls 40 partitioning the inside of the closed-cross-section section 38 between the upper wall 30 and the lower wall 32 in the vehicle width direction. This means that in the present exemplary embodiment, plural spaces 42, 44, 46, 48, 50, 52 are formed along the vehicle width direction inside the closed-cross-section section 38 of the EA member 28.

In the present exemplary embodiment, the spaces 42, 44, 46 provided at the vehicle width direction outside of the EA member 28 are spaces provided alternately with either the pair of first indentations 64, 66, or the pair of second indentations 68, 70, or the pair of first indentations 74, 76.

More specifically, the first indentation 64 provided to the spaces (outermost spaces) 42 of the EA member 28 is formed on the lower face 30A of the upper wall 30 so as to be indented toward the vehicle upper side of the spaces 42, and the first indentation 66 is formed on the upper face 32A of the lower wall 32 so as to be indented toward the vehicle lower side of the spaces 42.

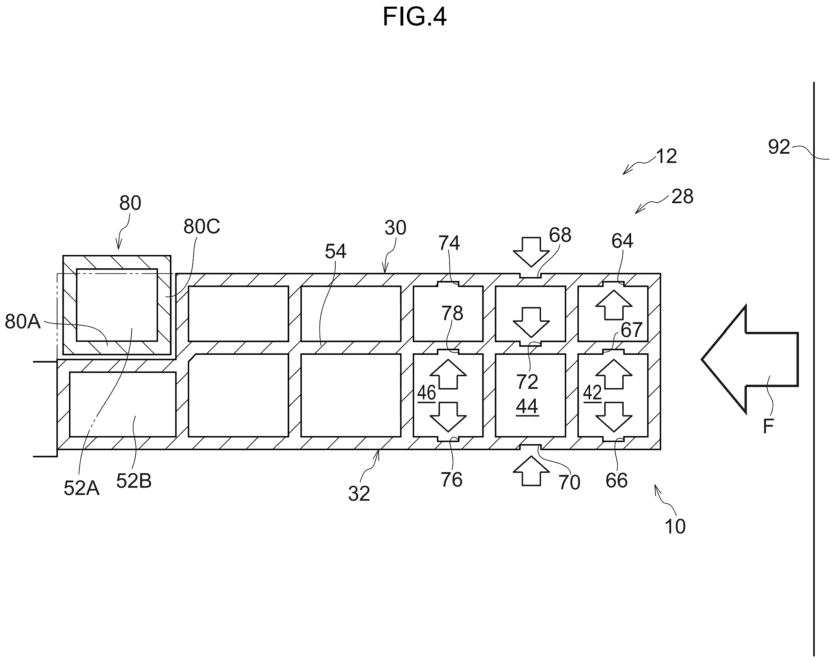

This means that due to forming the pair of first indentations 64, 66 in the upper wall 30 and the lower wall 32 of the spaces 42 of the EA member 28 in this manner, as illustrated in Fig. 2 and Fig. 4, when a crash load F is input to the EA member 28 during a side impact of the vehicle 12 (for example, an impact from a pole 92), the EA member 28 is axially compressed, and the spaces 42 undergo deformation (buckling deformation) toward the outside of the spaces 42 along the vehicle height direction about the pair of first indentations 64, 66. The crash energy is thereby absorbed by the EA member 28 in response to the input crash load F during a side impact of the vehicle 12. Substantially the same as for the spaces 42 also applies to the spaces 46 of the EA member 28.

However, for the pair of second indentations 68, 70 provided to the spaces 44 of the EA member 28, the second indentation 68 is indented toward the vehicle lower side of the spaces 44 at the upper face 30B of the upper wall 30, and the second indentation 70 is formed indented toward the vehicle upper side of the space 44 at the lower face 32B of the lower wall 32.

This means that due to forming the pair of second indentations 68, 70 to the upper wall 30 and the lower wall 32 of the EA member 28 in this manner, when the crash load F is input to the EA member 28 during a side impact of the vehicle 12, the EA member 28 is axially compressed, and the spaces 44 undergo deformation (buckling deformation) toward the inside of the spaces 44 along the vehicle height direction about the pair of second indentations 68, 70. The crash energy is thereby absorbed by the EA member 28 in response to the input crash load F during a side impact of the vehicle 12.

Namely, in the present exemplary embodiment, in cases in which the pair of first indentations 64, 66 are provided in the spaces 42, the spaces 42 deform along the vehicle height direction toward the outside of the spaces 42 about (with an origin of) the pair of first indentations 64, 66, and in cases in which the pair of second indentations 68, 70 are provided to the spaces 44, the spaces 44 deform along the vehicle height direction toward the inside of the spaces 44 about (with an origin of) the pair of second indentations 68, 70. Moreover, in cases in which the pair of first indentations 74, 76 are provided to the spaces 46, the spaces 46 deform along the vehicle height direction toward the outside of the spaces 46 about (with an origin of) the pair of first indentations 74, 76.

In the present exemplary embodiment, the spaces 42, 44, 46 along the vehicle width direction from the outermost spaces 42 disposed at the vehicle width direction outside, until reaching freely selected spaces (in this case the spaces 46), are provided alternately with either the pair of first indentations 64, 66, or the pair of second indentations 68, 70, or the pair of first indentations 74, 76.

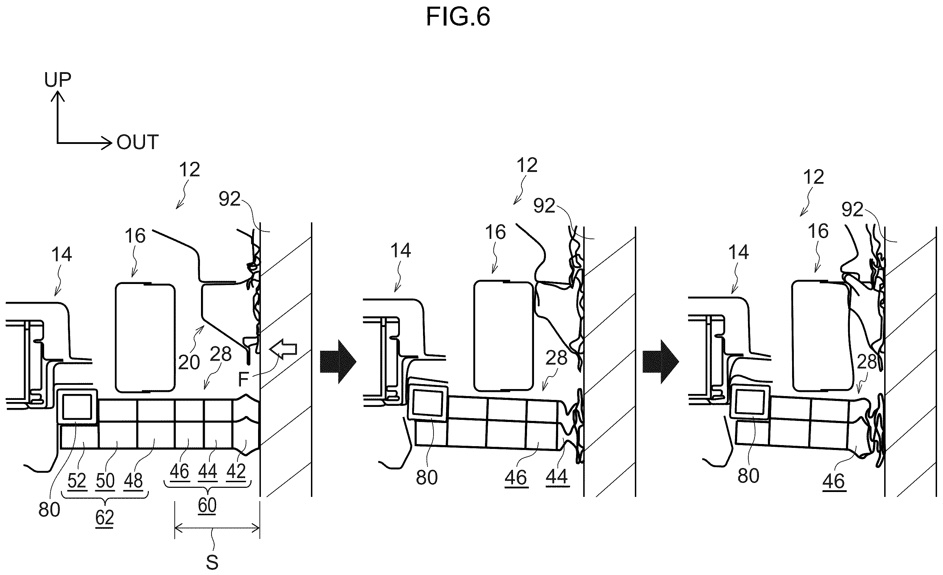

This means that in the present exemplary embodiment, as illustrated in Fig. 6, during a side impact of the vehicle 12, deformation of the EA member 28 for the spaces 42, 44, 46 along the vehicle width direction is alternately either by deforming toward the outside of the spaces 42 along the vehicle height direction at the spaces 42, or deforming toward the inside of the spaces 44 along the vehicle height direction at the spaces 44, or deforming toward the outside of the spaces 46 along the vehicle height direction at the spaces 46.

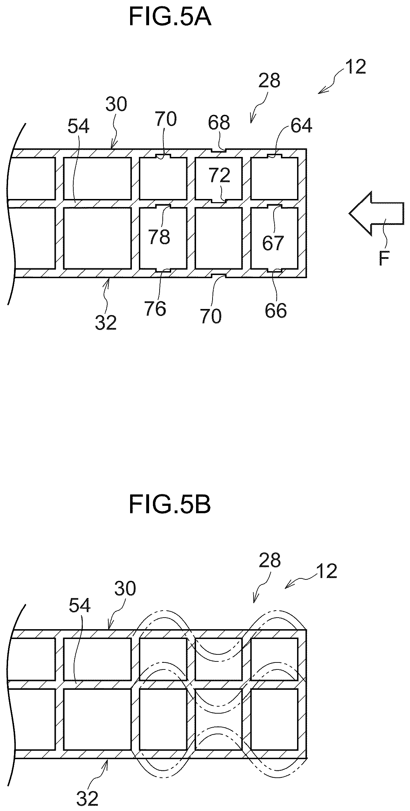

Namely, as illustrated in Fig. 5A and Fig. 5B, during a side impact of the vehicle 12 in the present exemplary embodiment, a so-called pantograph deformation can be induced in the EA member 28 about the pair of first indentations 64, 66 and the pair of second indentations 68, 70, thereby enabling the deformation mode by axial compression in the EA member 28 to be stabilized.

By stabilizing the deformation mode of the EA member 28 in this manner, as illustrated in Fig. 6, the crash energy may be effectively absorbed by the EA member 28 in response to the crash load F being input during a side impact of the vehicle 12. As a result thereof, the present exemplary embodiment may enable energy absorption by the EA member 28 to be achieved with a short stroke (S).

Furthermore, in the present exemplary embodiment, as illustrated in Fig. 2, the lateral partitioning wall 54 is provided in the EA member 28 to partition the inside of the closed-cross-section section 18 by vehicle upper/lower partitioning. Namely, in the present exemplary embodiment, the EA member 28 is configured as a two-tier structure. Adopting such a two-tier structure for the EA member 28 enables a higher load to be output by the EA member 28 than in a single-tier structure, enabling energy absorption when input with the crash load F by the EA member 28 with a shorter stroke than with a single-tier structure. However, the EA member 28 is not necessarily always a two-tier structure, and obviously a single-tier structure may also be employed.

In the lateral partitioning wall 54, the third indentation 67 indented toward the vehicle upper side of the lower space 42B is provided in the outermost spaces 42 to the lower face 54A of the lateral partitioning wall 54. Moreover, in the spaces 44, the third indentation 72 indented toward the vehicle lower side of the lower space 44B is provided to the upper face 54B of the lateral partitioning walls 54. Furthermore, in the spaces 46, the third indentation 78 indented toward the vehicle upper side of the lower space 46B is provided to the lower face 54A of the lateral partitioning wall 54.

This accordingly means that when the crash load F is input to the EA member 28 during a side impact of the vehicle 12, at the outermost spaces 42 of the EA member 28, in combination with deformation about origins of the pair of first indentations 64, 66 respectively formed to the upper wall 30 and the lower wall 32, the lateral partitioning wall 54 also undergoes deformation (buckling deformation) about an origin of the third indentation 67. Moreover, in the spaces 44 of the EA member 28, in combination with deforming about an origin of the pair of second indentations 68, 70 respectively formed to the upper wall 30 and the lower wall 32, the lateral partitioning wall 54 also deforms with the third indentation 72 as the origin. Furthermore, in the spaces 46 of the EA member 28, in combination with deforming about an origin of the pair of second indentations 68, 70 respectively formed to the upper wall 30 and the lower wall 32, the lateral partitioning wall 54 also deforms about an origin of the third indentation 78.

This means that, in the present exemplary embodiment, crash energy may be absorbed by plastic deformation by the EA member 28 formed with a two-tier structure in response to the input crash load F during a side impact of the vehicle 12.

Thus, as illustrated in Fig. 4, in cases in which the pair of second indentations 68, 70 have been provided to the upper wall 30 and the lower wall 32 of the spaces 44 of the EA member 28, the upper wall 30 deforms toward the inside of the upper space 44A, and the lower wall 32 deforms toward the inside of the lower space 44B.

This means that due to providing the third indentation 72 on the upper face 54B side of the lateral partitioning wall 54, the lateral partitioning wall 54 is able to deform toward the inside of the lower space 44B. Namely, in the present exemplary embodiment, interference between the lateral partitioning wall 54 and the upper wall 30 is avoided, enabling a configuration in which respective deformations do not impede each other.

However, in the lower space 44B, the lower wall 32 and the lateral partitioning wall 54 deform toward the inside of the lower space 44B. In the present exemplary embodiment, as illustrated in Fig. 2, the width dimension W1 of the spaces 42, 44, 46 configuring the outside space section 60 are configured with substantially the same dimensions as each other. Moreover, as described above, in the present exemplary embodiment, the height dimension H2 of the lower space 44B is greater than the height dimension H1 of the upper space 44A. Furthermore, in the present exemplary embodiment, the height dimension H2 of the lower space 44B is greater than the width dimension W 1 of the upper space 44A, and the height dimension H2 of the lower space 44B is greater than the width dimension W1 of the lateral partitioning wall 54 and the lower wall 32.

This means that, in the present exemplary embodiment, interference in the lower space 44B between the lateral partitioning wall 54 and the lower wall 32 may be avoided, even when the lateral partitioning wall 54 and the lower wall 32 deform toward the inside of the lower space 44B, enabling a configuration in which respective deformations do not impede each other.

However, in the present exemplary embodiment, as illustrated in Fig. 1, the support member 80 for supporting the EA member 28 is provided to the battery pack 14. The support member 80 is configured including the fixing wall 80A to which the EA member 28 provided along the vehicle width direction is fixed, and the fixing wall 80A and the lateral partitioning wall 54 of the EA member 28 overlap with each other in the vehicle height direction.

Namely, in the present exemplary embodiment, the lateral partitioning wall 54 of the EA member 28 and the fixing wall 80A of the support member 80 are in a state superimposed on each other in vehicle side view when viewed from the vehicle width direction outside. This means that in the present exemplary embodiment, as illustrated in Fig. 4, the crash load F input to the EA member 28 during a side impact of the vehicle 12 can be transmitted from the lateral partitioning wall 54 to the fixing wall 80A of the support member 80. In other words, the crash load F can be distributed from the EA member 28 to the support member 80.

Moreover, in the present exemplary embodiment, in the EA member 28, the upper wall 30, the lower wall 32, and the lateral partitioning wall 54 are configured with a thickness such that in adjacent of the spaces 42, 44, 46, 48, 50, 52 along the vehicle width direction, the plate thickness of the spaces on the vehicle width direction inside is thicker than the plate thickness of the spaces on the vehicle width direction outside.

Namely, in the present exemplary embodiment, the rigidity is higher in the EA member 28 at the vehicle width direction inside than at the vehicle width direction outside. This means that, in the present exemplary embodiment, during a side impact of the vehicle 12, the load required to deform the EA member 28 in response to the input crash load F rises on progression inward from the vehicle width direction outside toward the vehicle width direction inside.

Namely, in the present exemplary embodiment, load is lower at the initial stage during a side impact of the vehicle 12 so as to reduce the burden on an occupant, and the amount of crash energy absorption in the EA member 28 is configured so as to increase from the vehicle width direction outside toward the vehicle width direction inside.

In the present exemplary embodiment, as illustrated in Fig. 3 and Fig. 4, a position in the EA member 28 corresponding to the innermost upper space 52A is cut away, and the support member 80 is provided to the battery pack 14 at the position corresponding to the innermost upper space 52A, and the EA member 28 provided at the vehicle width direction outside of the battery pack 14 is supported by the support member 80.

Due to the support member 80 being disposed at the position corresponding to the innermost upper space 52A of the EA member 28 in this manner, the innermost lower space 52B is disposed at the vehicle lower side of the support member 80, such that the upper wall 53 of the innermost lower space 52B is fixed to the fixing wall 80A of the support member 80. Namely, in the present exemplary embodiment, the support member 80 configures part of the upper space section 56 of the EA member 28.

In this manner, in the present exemplary embodiment, as illustrated in Fig. 4, when the crash load F has been input to the EA member 28, the EA member 28 is able to be supported by the fixing wall 80A and a side wall 80C of the support member 80 and, although not illustrated in the drawings, the EA member 28 is, for example, suppressed from collapsing toward the vehicle lower side more than cases in which the upper wall 30 of the EA member 28 has been fixed to the fixing wall 80A of the support member 80, enabling crash energy to be effectively absorbed in response to the input crash load F.

Furthermore, in the present exemplary embodiment, as illustrated in Fig. 1, the side frame 16 at the vehicle width direction outside of the battery pack 14 extends in the vehicle front-rear direction, and the rocker 20 extends in the vehicle front-rear direction at the vehicle width direction outside of the side frames 16. The EA member 28 extends toward the vehicle width direction outside at the vehicle height direction lower side of the side frame 16.

Namely, in the present exemplary embodiment, in the vehicle 12, the rocker 20, the EA member 28, and the side frame 16 are disposed in this sequence from the vehicle width direction outside and, as illustrated in Fig. 6, during a side impact of the vehicle 12, the crash energy in response to the input crash load F is absorbed mainly by the rocker 20 and the EA member 28. The present exemplary embodiment is able to stabilize the deformation mode of the EA member 28 during a side impact of the vehicle 12, and is able to effectively absorb crash energy in response to the input crash load F.

Providing an EA member 28 just beside a battery pack 14 is difficult in a so-called body-on-frame vehicle due to space constraints being different to those of a monocoque vehicle. This means that in a body-on-frame vehicle, for example, a configuration is adopted in which the EA member 28 is provided along the vehicle width direction at a vehicle lower side of the side frame 16 and the rocker 20.

In the present exemplary embodiment, as illustrated in Fig. 5A and Fig. 5B, the deformation mode of the EA member 28 may be stabilized during a side impact of the vehicle 12, enabling crash energy to be effectively absorbed in response to the input crash load F. This means that, as illustrated in Fig. 6, due to effectively absorbing the crash energy with the EA member 28 disposed at the vehicle lower side of the side frame 16 and the rocker 20, the present exemplary embodiment is applicable even in a body-on-frame vehicle where it is difficult to provide a EA member 28 just beside a battery pack 14.

Moreover, in the present exemplary embodiment, in the EA member 28 illustrated in Fig. 2, the pair of first indentations 64, 66, the pair of second indentations 68, 70, and the pair of first indentations 74, 76 provided to the upper wall 30 and the lower wall 32, and the third indentations 67, 72, 78 provided to the lateral partitioning wall 54, are respectively provided to the outside space section 60 (the outermost spaces 42, the spaces 44, 46) that are further to the vehicle width direction outside than the side frame 16. As described above, in the present exemplary embodiment, due to the rigidity being higher in the EA member 28 at the vehicle width direction outside than at the inside thereof, the outside space section 60 of the EA member 28 has a lower rigidity than the inside space section 62 (the spaces 48, 50), thereby facilitating buckling deformation thereof.

As illustrated in Fig. 1, due to the outside space section 60 of the EA member 28 and the rocker 20 being disposed further to the vehicle width direction outside than the side frames 16, as illustrated in Fig. 6, the crash energy is absorbed by the plastic deformation of the rocker 20 and the outside space section 60 of the EA member 28 in response to the input crash load F during a side impact of the vehicle 12. Remaining crash energy in response to the crash load is absorbed by the side frame 16 and the inside space section 62 of the EA member 28.

In the exemplary embodiment described above, the EA member 28 deforms in alternate directions at each of the spaces 42, 44, 46, along the vehicle width direction, with the spaces 42 deforming along the vehicle height direction toward the outside of the spaces 42, the spaces 44 deforming along the vehicle height direction toward the inside of the spaces 44, and the spaces 46 deforming along the vehicle height direction toward the outside of the spaces 46.

Namely, in the present exemplary embodiment, as illustrated in Fig. 5A and Fig. 5B, inducing a so-called pantograph deformation in the EA member 28 about the pair of first indentations 64, 66 and the pair of second indentations 68, 70 during a side impact of the vehicle 12 enables the deformation mode by axial compression to be stabilized in the EA member 28. In the present exemplary embodiment, as long as the deformation mode by axial compression in the EA member 28 can be stabilized, the deformation mode is not limited to the above mode.

For example, although not illustrated in the drawings, a configuration may be adopted in which the spaces 42 deform along the vehicle height direction toward the inside of the spaces 42, the spaces 44 deform along the vehicle height direction toward the outside of the spaces 44, and the spaces 46 deform along the vehicle height direction toward the inside of the spaces 46. Moreover, a configuration may be adopted in which the spaces 42, 44, 46 are respectively deformed along the vehicle height direction toward the outside of the spaces 42, 44, 46.

Moreover, although in the present exemplary embodiment, as illustrated in Fig. 2, the width dimension W1 of the spaces 42, 44, 46 configuring the outside space section 60 are configured as substantially the same dimensions as each other, there is no limitation thereto. For example, the width dimension of the spaces may gradually increase toward the vehicle width direction inside. Moreover, although the lateral partitioning wall 54 should not interfere with the upper wall 30 and the lower wall 32, the height dimension H2 of the lower space 44B need not always be greater than the height dimension H1 of the upper space 44A.

Various other modifications may also be implemented in the present disclosure within a range not departing from the scope of the present disclosure. Moreover, obviously the scope of rights of the present disclosure is not limited by the above exemplary embodiments.

## Claims

1. A vehicle lower section structure comprising:
a battery (14); and
an energy absorption member (28) disposed at a vehicle width direction outside of the battery (14), the energy absorption member (28) being formed with a closed-cross-section section (38) that extends in the vehicle width direction in front view as viewed from a vehicle front-rear direction,
wherein the energy absorption member (28) is configured to include:
an upper wall (30) configuring a vehicle height direction upper end portion of the closed-cross-section section (38),
a lower wall (32) configuring a vehicle height direction lower end portion of the closed-cross-section section (38), and
a plurality of upright partitioning walls (40) that partition the inside of the closed-cross-section section (38), between the upper wall (30) and the lower wall (32), in the vehicle width direction to form a plurality of spaces (42, 44, 46); and
wherein the spaces (42, 44, 46) along the vehicle width direction from an outermost space (42) disposed at a vehicle width direction outside to a freely selected space (46) of the spaces are provided alternately with either:
a pair of first indentations (64, 66, 74, 76) in a lower face of the upper wall (30) indented toward a vehicle upper side of the space and in an upper face of the lower wall (32) indented toward a vehicle lower side of the space, or
a pair of second indentations (68, 70) in an upper face of the upper wall (30) indented toward the vehicle lower side of the space and in a lower face of the lower wall (32) indented toward the vehicle upper side of the space.

2. The vehicle lower section structure of claim 1, wherein the pair of first indentations (64, 66, 74, 76) are provided at the outermost space (42).

3. The vehicle lower section structure of claim 1, wherein:
the energy absorption member (28) includes a lateral partitioning wall (54) to partition the inside of the closed-cross-section section (38) by vehicle upper/lower partitioning; and
a third indentation (67, 72, 78) that is either in an upper face of the lateral partitioning wall (54) indented toward the vehicle lower side or is in a lower face of the lateral partitioning wall (54) indented toward the vehicle upper side is provided to the spaces where the pair of first indentations (64, 66, 74, 76) or the pair of second indentations (68, 70) are formed.

4. The vehicle lower section structure of claim 3, wherein:
the vehicle lower section structure further comprises a support member (80) provided at the battery (14), the support member (80) supporting the energy absorption member (28),
the support member (80) includes a fixing wall (80A) that configures a part of the support member (80) to which the energy absorption member (28) provided along the vehicle width direction is fixed, and
the fixing wall (80A) and the lateral partitioning wall (54) overlap in the vehicle height direction.

5. The vehicle lower section structure of claim 3, wherein for adjacent of the spaces along the vehicle width direction, the upper wall (30), the lower wall (32), and the lateral partitioning wall (54), have a plate thickness that is thicker for a space at the vehicle width direction inside than for a space at the vehicle width direction outside.

6. The vehicle lower section structure of claim 4, wherein:
the lateral partitioning wall (54) provided inside the closed-cross-section section (38) partitions the plurality of spaces (42, 44, 46, 48, 50, 52) by vehicle upper/lower partitioning respectively into an upper space (42A, 44A, 46A, 48A, 50A, 52A) and a lower space (42B, 44B, 46B, 48B, 50B, 52B), and
a position corresponding to an innermost upper space (52A) disposed at a vehicle upper side of an innermost lower space (52B) provided at the vehicle width direction inside of the energy absorption member (28) is cut away, and the support member (80) is provided at the position corresponding to the innermost upper space (52A).

7. The vehicle lower section structure of claim 3, wherein:
the lateral partitioning wall (54) provided inside the closed-cross-section section partitions the plurality of spaces (42, 44, 46, 48, 50, 52) by vehicle upper/lower partitioning respectively into an upper space (42A, 44A, 46A, 48A, 50A, 52A) and a lower space (42B, 44B, 46B, 48B, 50B, 52B), and
a height dimension along the vehicle height direction of the lower space (42B, 44B, 46B, 48B, 50B, 52B) is greater than the height dimension of the upper space (42A, 44A, 46A, 48A, 50A, 52A), and the height dimension of the lower space (42B, 44B, 46B, 48B, 50B, 52B) is greater than a width dimension along the vehicle width direction of the upper space (42A, 44A, 46A, 48A, 50A, 52A).

8. The vehicle lower section structure of claim 7, wherein the third indentation (67, 72, 78) is formed at a lower face of the lateral partitioning wall (54) at a position corresponding to the pair of first indentations (64, 66, 74, 76), and is formed to an upper face of the lateral partitioning wall at a position corresponding to the pair of second indentations (68, 70).

9. The vehicle lower section structure of claim 3, further comprising:
a side frame (16) extending in the vehicle front-rear direction, the side frame (16) being disposed at the vehicle width direction outside of the battery (12); and
a rocker (20) extending in the vehicle front-rear direction, the rocker (20) being disposed at the vehicle width direction outside of the side frame (16),
wherein the energy absorption member (28) extends toward the vehicle width direction outside at a vehicle height direction lower side of the side frame (16).

10. The vehicle lower section structure of claim 9, wherein the pair of first indentations (64, 66, 74, 76) or the pair of second indentations (68, 70) provided to the upper wall (30) and the lower wall (32), and the third indentation (67, 72, 78) provided to the lateral partitioning wall (54), are provided to an outside space section (60) further to the vehicle width direction outside than the side frame (16), the side frame (16) extends in the vehicle front-rear direction and is disposed at the vehicle width direction outside of the battery (12).
